(19) Europäisches Patentamt / European Patent Office / Office européen des brevets

(11) **EP 3 365 966 B1**

(12) **EUROPÄISCHE PATENTSCHRIFT**

(45) Veröffentlichungstag und Bekanntmachung des Hinweises auf die Patenterteilung:
**20.07.2022 Patentblatt 2022/29**

(21) Anmeldenummer: **16805026.8**

(22) Anmeldetag: **21.11.2016**

(51) Internationale Patentklassifikation (IPC):
**H02M 1/36** *(2007.01)* **H02M 7/483** *(2007.01)*

(52) Gemeinsame Patentklassifikation (CPC):
**H02M 1/36; H02M 7/4835;** Y02B 70/10

(86) Internationale Anmeldenummer:
**PCT/EP2016/078331**

(87) Internationale Veröffentlichungsnummer:
**WO 2017/108296 (29.06.2017 Gazette 2017/26)**

(54) **ANORDNUNG ZUM EINSCHALTEN EINES ZWEIRICHTUNGSSCHALTERS EINES KONVERTERMODULS, KONVERTERMODUL FÜR EINEN MODULAREN MULTI-LEVEL-UMRICHTER MIT DER ANORDNUNG SOWIE VERFAHREN ZUR HERSTELLUNG DER BETRIEBSBEREITSCHAFT EINES KONVERTERMODULS MIT EINEM ZWEIRICHTUNGSSCHALTER**

ARRANGEMENT FOR SWITCHING ON A TWO-WAY SWITCH OF A CONVERTER MODULE, CONVERTER MODULE FOR A MODULAR MULTI-LEVEL CONVERTER HAVING THE ARRANGEMENT AND METHOD FOR PRODUCING OPERATIONAL STANDBY FOR A CONVERTER MODULE HAVING A TWO-WAY SWITCH

DISPOSITIF POUR ENCLENCHER UN COMMUTATEUR BIDIRECTIONNEL D'UN MODULE CONVERTISSEUR, MODULE CONVERTISSEUR DESTINÉ À UN CONVERTISSEUR MULTI-NIVEAUX MODULAIRE COMPRENANT LE DISPOSITIF ET PROCÉDÉ POUR RENDRE PRÊT À L'EMPLOI UN MODULE CONVERTISSEUR COMPRENANT UN COMMUTATEUR BIDIRECTIONNEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2015 DE 102015226199**

(43) Veröffentlichungstag der Anmeldung:
**29.08.2018 Patentblatt 2018/35**

(73) Patentinhaber: **Siemens Energy Global GmbH & Co. KG**
**81739 München (DE)**

(72) Erfinder:
- **ALVAREZ VALENZUELA, Rodrigo Alonso**
  **90408 Nürnberg (DE)**
- **DORN, Jörg**
  **96155 Buttenheim (DE)**
- **GAMBACH, Herbert**
  **91080 Uttenreuth (DE)**
- **SCHREMMER, Frank**
  **90768 Fürth (DE)**

(56) Entgegenhaltungen:
**EP-A1- 0 075 699 US-A1- 2015 214 828**

EP 3 365 966 B1

**Beschreibung**

Die Erfindung betrifft ein Konvertermodul für einen Modularen Multi-Level-Umrichter, aufweisend einen Zweirichtungsschalter und eine Anordnung zum Einschalten des Zweirichtungsschalters Aus der WO 2013/060354 ist es bekannt, in einer Brückenschaltung eines Konvertermoduls, z.B. für einen Modularen MultiLevel-Umrichter einer Hochspannungsgleichstromübertragung, einen Zweirichtungsschalter vorzusehen. Dieser Zweirichtungsschalter ist bei entsprechender Ansteuerung in der Lage, das Konvertermodul nicht nur für eine, sondern beide Stromrichtungen zu sperren. Dies hat den Vorteil, dass im Kurzschlussfall auf der Gleichspannungsseite eines Umrichters nur eine verminderte Rückwirkung auf die Wechselspannungsseite erfolgt. Die Unterbrechung des Leistungsflusses an sich ergibt nämlich bereits eine Rückwirkung, die jedoch klein ist gegenüber dem vermiedenen Kurzschluss. Auch aus der WO 2012/116738 sind Module für Umrichter mit Zweirichtungsschaltern bekannt. Ein geeigneter IGBT für einem Zweirichtungsschalter mit entsprechender Fähigkeit zum Rückwärtssperren eines Stromes ist beispielsweise aus der Produktwerbung "Moving forward with reverse-blocking IGBTs), Nitesh Satheeesh et al., Fuji Electric 05.03.2014 bekannt. Auch der Artikel "Using Reverse-Blocking IGBTs in Power Converters for Adjustable-Speed Drives" von Klumpner et al., IEEE 2006 behandelt aktuelle Konzepte für Zweirichtungsschalter.

Bei Zweirichtungsschaltern werden Halbleiterschalter verwendet, die erst durch Anlegen einer Steuerspannung an das jeweilige Gate leitend geschaltet werden. Aus diesem Grund sind die Halbleiterschalter im Zweirichtungsschalter vor dem Einschalten des Konvertermoduls geöffnet bzw. sperrend. Als Be sonderheit bei der Verwendung eines Zweirichtungsschalters in einem Konvertermodul (z.B. in einem Umrichter für Hochspannungsgleichstromübertagung (HGÜ)) ergibt sich daher das Problem, dass kein Vorladen des Kondensators im Konvertermodul erfolgen kann, weil beide Stromrichtungen gesperrt sind. Somit kann das Konvertermodul beim ersten Einsatz oder nach einer Wartung nicht betriebsbereit gemacht werden.

Eine Ansteuervorrichtung für einen Zweirichtungsschalter ist aus der US 2015/0214828 A1 bekannt.

Bei einer herkömmlichen elektrischen Energieversorgung z.B. über einen Stromwandler ergibt sich aufgrund des Hochspannungsniveaus beispielsweise in einer HGÜ-Anlage ein hoher technischer Aufwand für eine entsprechende Isolierung, was hohe Kosten verursacht. Auch eine Spannungsversorgung mit einer Batterie ist nicht unproblematisch, weil diese eine begrenzte Lebensdauer aufweist und daher nach einer gewissen Zeit zu Wartungsaufwänden und verringerter Verfügbarkeit eines Konvertermoduls führt.

Die EP 0075699 A1 offenbart eine Energieversorgung für einen Sensor, bei der optische in elektrische Leistung umgewandelt wird.

An die Erfindung stellt sich die Aufgabe, ein Konvertermodul anzugeben, das besonders sicher und vergleichsweise kostengünstig betriebsbereit gemacht werden kann.

Die Erfindung löst diese Aufgabe durch ein Konvertermodul gemäß Anspruch 1.

Erfindungsgemäß wird folglich zuerst eine geringe Menge elektrische Energie durch Umwandlung aus elektromagnetischer-Strahlung bereitgestellt und der Zweirichtungsschalter mindestens in einer Stromrichtung geschlossen. Anschließend kann der Kondensator des Konvertermoduls vorgeladen werden. Damit ist das Konvertermodul betriebsbereit.

Aus der DE 10 2013 213 263 ist zwar ein Stromrichter mit einem Submodul und einem Energieverbraucher wie etwa einer Steuereinrichtung bekannt, dabei wird jedoch über einen mittels kinetischer Energie betriebenen Generator elektrische Energie für die Energieverbraucher bereitgestellt. Die kinetische Energie wird z.B. durch Druckluft oder eingepumptes Wasser oder Öl erzeugt, das eine Turbine antreibt oder auf Piezoelektrische Bauelemente einwirkt. Es sollen Spannungen von einigen Volt erzeugt werden, um den vergleichsweise hohen Energiebedarf für eine Steuereinrichtung bereit stellen zu können. Vorgeschlagen werden weiterhin Laserlicht, Lichtwellenleiter, Batterien oder Solarzellen zur Energieversorgung, wobei diese Möglichkeiten jedoch als unzureichend in Bezug auf die erzeugbare elektrische Energiemenge und technisch kompliziert dargestellt werden. Insbesondere wird erläutert, dass mittels der kinetischen Energie der Druckluft oder der Flüssigkeit ein schnelles Hochfahren einer Hochspannungsanlage erfolgen kann, was bei den anderen Möglichkeiten nicht durchführbar wäre.

Im Gegensatz dazu können bei der Umwandlung von elektromagnetischer Strahlung in elektrische Energie ausreichend schnell vergleichsweise kleine Mengen elektrische Energie bereitgestellt werden, um nach maximal einigen Minuten ein Einschalten des Zweirichtungsschalters zu gestatten. Somit ist diese Methode geeignet, einen Stromrichter vor dem ersten Betrieb oder nach einer Wartung betriebsbereit zu machen.

In einer bevorzugten Ausführungsform der erfindungsgemäßen Anordnung weist die Energieerzeugungseinrichtung eine Solarzelle auf. Dies ist ein Vorteil, weil Solarzellen kostengünstig und leicht die erforderliche Menge elektrische Energie bereitstellen können. Bisherige IGBTs benötigen Gateladungen von ca. 10-20pC um zu schalten. Setzt man als Vergleichswerte an, dass bei direkter Sonneneinstrahlung ca. 10 mW/cm^2 Energie eingestrahlt werden und dass eine Solarzelle 10% einer solchen Energiemenge in elektrische Energie umwandeln könnte, so dauert das Aufladen mit einer Solarzelle von 1 cm^2 Fläche von 20 $\mu$C auf 15 V gemäß nachfolgender Gleichung 300ms.

$$t = Q/P{*}U = 20\mu AS \,/1mVA \,{*}\,15V = 300 \text{ ms}.$$

Üblicherweise sind energietechnische Anlagen mit erfindungsgemäßen Anordnungen nicht im Freien der Sonneneinstrahlung ausgesetzt, sondern in Hallen oder Kellern angeordnet. In einem solchen Fall kann die benötige Lichtmenge auch durch künstliches Licht bereitgestellt werden, z.B. indem beim Hochfahren eines modularen Multi-Level-Umrichters in einer Halle das Licht für einige Minuten eingeschaltet wird oder indem die Solarzelle des jeweiligen Moduls gezielt mit Licht bestrahlt wird. Dies könnte manuell durch einen Techniker mit einem Scheinwerfer erfolgen oder automatisch durch z.B. einen Deckenscheinwerfer, der computergesteuert selbsttätig geführt wird, um alle Solarzellen kurzzeitig anzustrahlen.

In einer weiteren bevorzugten Ausführungsform der erfindungsgemäßen Anordnung weist die Energieerzeugungseinrichtung eine Fotodiode auf. Dies ist ein Vorteil, weil Fotodioden einfach, kostengünstig und lange erprobt sind.

In einer weiteren bevorzugten Ausführungsform der erfindungsgemäßen Anordnung ist die Fotodiode mit einem Lichtwellenleiter verbunden. Dies ist vorteilhaft, weil die benötigte Energie auf diese Weise in einem geschlossenen System zu jedem Modul transportiert werden kann. Eine Abhängigkeit von der Lichtstärke bzw. Beleuchtung der Umgebung besteht nicht, weil der Lichtwellenleiter einerseits mit der Fotodidode verbunden ist und andererseits mit einer geeigneten Lichtquelle.

In einer weiteren bevorzugten Ausführungsform der erfindungsgemäßen Anordnung ist der Lichtwellenleiter zusätzlich mit einer Kommunikationseinrichtung des Konvertermoduls verbunden. Dies ist ein Vorteil, weil i.d.R. bereits Lichtwellenleiter zur Datenkommunikation mit einer Kommunikationseinrichtung des Konvertermoduls vorgesehen sind. Wird nun bei spielsweise vor das Kommunikationsmodul ein optischer Verteiler angeordnet, so kann in einem ersten Modus Licht über den Lichtwellenleiter zur Fotodiode geleitet werden und in einem zweiten Modus kann das Licht zur Datenkommunikation zum Kommunikationsmodul geleitet werden. Auch eine Mischform, bei der beispielsweise ein halbdurchlässiger Spiegel als optischer Verteiler genutzt wird, so dass gleichzeitig Licht zur Fotodiode und zur Kommunikationseinrichtung geleitet wird, ist mit Vorteil einsetzbar.

In einer weiteren bevorzugten Ausführungsform der erfindungsgemäßen Anordnung ist die Energieerzeugungseinrichtung geeignet, lediglich umgebende elektromagnetische Strahlung wie Funk- oder Fernsehsignale zur Energiegewinnung zu nutzen. Dies ist ein Vorteil, weil häufig am Einsatzort erfindungsgemäßer Module z.B. Funksignale vorhanden sind, die zur Energiegewinnung ausgebeutet werden können. Diese Technik, die häufig bei so genannten "Ambient Backscatter" Systemen eingesetzt wird, ist aus der Veröffentlichung "Ambient Backscatter: Wireless Communication Out of Thin Air" von Vincent Liu et al., University of Washington, erschienen bei SIGCOMM'13, August 12-16, 2013, Hong Kong, China, bekannt. Darin werden Geräte beschrieben, die miteinander kommunizieren können und dabei lediglich umgebende elektromagnetische Strahlung ("ambient radiofrequency signals") wie etwa Fernsehsignale zur Energieversorgung benötigen. Es wird die umgebende elektromagentische Strahlung von einem Gerät in modifizierter Form zurückgestreut wird, um Informationen wie z.B. Signale eines Berührungssensors zu übertragen. Weiterhin ist der Website-Artikel "Battery-less wireless temperature sensors based on low power UHF RFID tags", 10. Juni 2013 von Mikel Choperena bekannt ("http://www.sensorsmag.com/product/developmentplatform-advances-battery-free-sensors-and"), der Sensoren der Firma Farsens beschreibt. Diese Sensoren nutzen RFID mit ultrahochfrequenten Signalen (ca. 900 MHz) und messen Temperatur, Druck, Luftfeuchtigkeit, etc. Ein solcher Sensor ist auch aus der Produktbroschüre "EPC C1G2 COMPLIANT BATTERYLESS SENSOR/ACTUATOR DEVELOPMENT PLATFORM POWERED BY ANDY100 PB-MEDUSA-V01" der Firma Farsens aus dem September 2014 bekannt.

In einer weiteren bevorzugten Ausführungsform der erfindungsgemäßen Anordnung weist die Energieerzeugungseinrichtung einen Energiespeicher auf. Dies ist ein Vorteil, weil die erzeugte elektrische Energie auf diese Weise gesammelt und zwischengespeichert werden kann, bis der Zweirichtungsschalter geschaltet werden kann.

In einer weiteren bevorzugten Ausführungsform der erfindungsgemäßen Anordnung weist der Energiespeicher einen Kondensator auf. Dies ist ein Vorteil, weil Kondensatoren lange haltbar und schnell aufladbar/entladbar sind.

In einer weiteren bevorzugten Ausführungsform der erfindungsgemäßen Anordnung weist der Energiespeicher einen Supercapacitor auf. Dies ist ein Vorteil, weil ein Supercapacitor lange haltbar und schnell aufladbar/entladbar ist.

Ferner stellt sich an die Erfindung die Aufgabe, ein Verfahren anzugeben, mit dem besonders sicher und vergleichsweise kostengünstig die Betriebsbereitschaft eines Konvertermoduls hergestellt wird.

Die Erfindung löst diese Aufgabe durch ein Verfahren gemäß Anspruch 11. Es ergeben sich für das erfindungsgemäße Verfahren und seine Ausführungsformen gemäß den abhängigen Ansprüchen 12 bis 15 sinngemäß die gleichen Vorteile wie eingangs für die erfindungsgemäße Anordnung geschildert.

Zur besseren Erläuterung wird die Erfindung anhand von bevorzugten Ausführungsbeispielen schematisch dargestellt.

Es zeigen die

Figur 1    einen Aufbau eines bekannten Multilevel-Konverters mit Freilaufdioden, und

Figur 2     verschiedene Bauformen für Konvertermodule mit Zweirichtungsschaltern, und

Figur 3     einen Aufbau eines Multilevel-Konverters mit Zweirichtungsschaltern, und

Figur 4     ein Konvertermodul mit einer erfindungsgemäßen Anordnung zum Einschalten eines Zweirichtungsschalters.

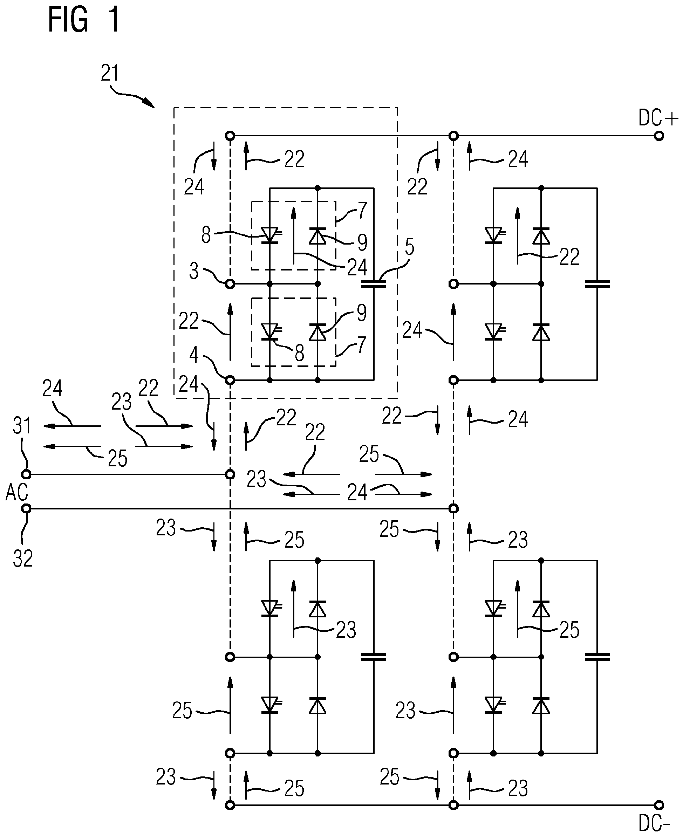

Die Figur 1 zeigt einen stark vereinfachten Aufbau eines Modularen Multilevel-Konverters mit zwei Phasen 31,32 auf der Wechselspannungsseite AC und zwei Anschlüssen DC+, DC- auf der Gleichspannungsseite. Der Konverter weist in diesem Beispiel vier Module 21 auf, die baugleich ausgeführt sind. Dabei sind für jede Phase zwei Konvertermodule 21 vorgesehen. Das Konvertermodul 21 (links oben) ist detaillierter gekennzeichnet: Es weist zwei Halbleiterschalter 8 auf, zu denen je eine antiparallele (d.h. mit gegenläufig freigegebenen Strompfad) Freilaufdiode 9 parallel geschaltet ist. Zwischen den Halbleiterschaltern 8, die als IGBTs ausgebildet sind, befindet sich ein Mittelanschluss 3, die mit der Gleichspannungsseite DC+ verbunden ist. Parallel zu den Halbleiterschaltern ist ein Kondensator 5 angeordnet. Halbleiterschalter 8 und Freilaufdiode 9 bilden jeweils einen Einrichtungsschalter 7, d.h. dass der Halbleiterschalter eine Richtung des Stromflusses sperren kann.

Vor Inbetriebnahme des Konverters muss der jeweilige Kondensator 5 vorgeladen werden. Dies ist problemlos möglich, weil über die Freilaufdiode 9 ein Strompfad 22,23,24,25 offen ist. Die Strompfade 22,23,24,25 sind mit Pfeilen dargestellt. So ist beispielsweise über die Freilaufdiode 9 des unteren Einrichtungsschalters 7 entsprechend des Strompfads 22 ein passives Vorladen des Kondensators möglich.

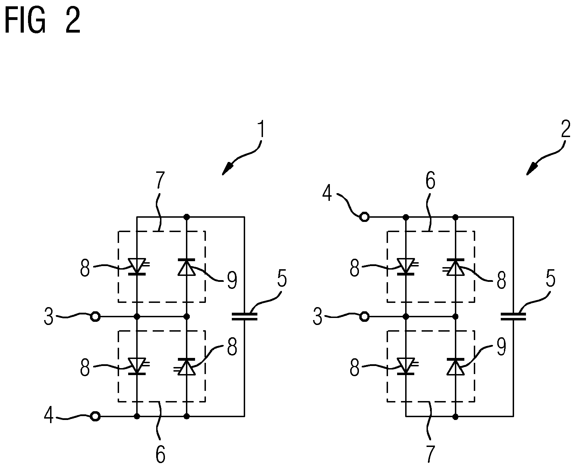

Die Figur 2 zeigt verschiedene Bauformen für Konvertermodule 1,2 mit Zweirichtungsschaltern 6. Dabei wurde eine der beiden Freilaufdioden jeweils durch einen weiteren Halbleiterschalter 8 ersetzt, um einen Zweirichtungsschalter 6 auszubilden, der in jeder Stromrichtung sperren kann. Dies hat den Vorteil, dass Kurzschlüsse auf der Gleichspannungsseite besser beherrscht werden können.

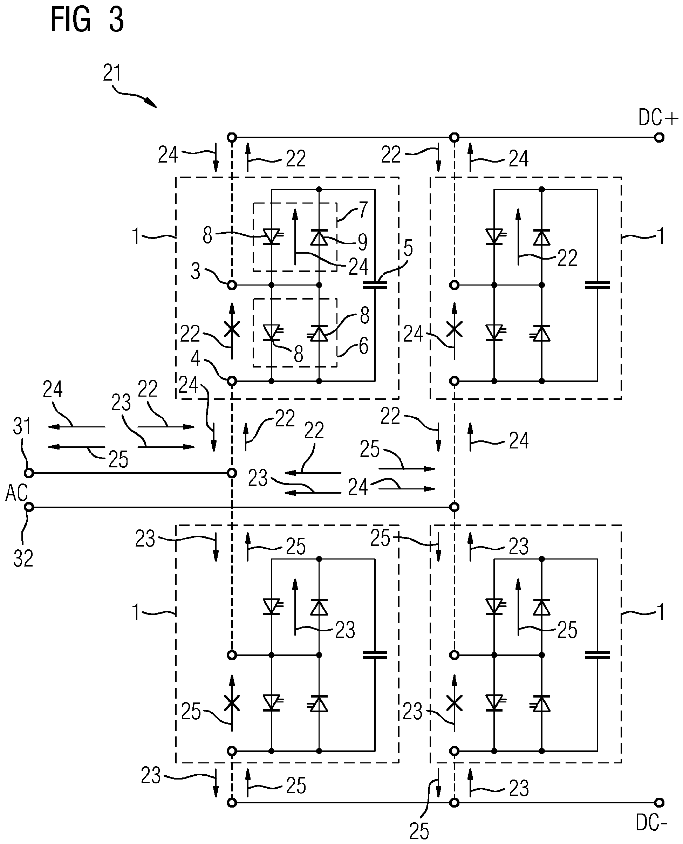

Die Figur 3 zeigt das gleiche Schaltbild wie Figur 1, wobei jedoch anstatt des Konvertermoduls 21 aus Figur 1 das Konvertermodul 1 mit Zweirichtungsschalter 6 gemäß Figur 2 eingesetzt wird. Hierdurch ergibt sich das Problem, dass im stromlosen Zustand, also z.B. vor der ersten Inbetriebnahme oder nach einer Wartung, der Kondensator 5 nicht vorgeladen werden kann, weil der Zweirichtungsschalter 6 den Strompfad 22 sperrt (analog die Strompfade 23-25 für die drei weiteren Module). Dies wird durch die durchkreuzten Pfeile angedeutet.

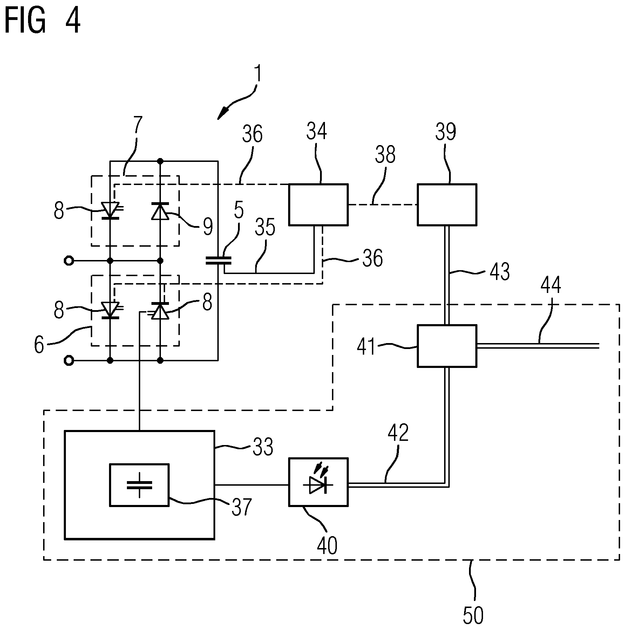

Die Figur 4 zeigt eine erfindungsgemäße Lösung dieses Problems. Gezeigt ist ein Konvertermodul 1 mit einem Einrichtungsschalter 7 und einem Zweirichtungsschalter 6, deren Halbleiterschalter 8 über Steuerleitungen 36 an eine Steuereinrichtung 34 angeschlossen sind. Die Steuereinrichtung 34 kann über eine Leitung 35 von dem Kondensator 5 mit Energie versorgt werden - wenn dieser bereits vorgeladen ist.

Der Rechte der beiden Halbleiterschalter 8 im Zweirichtungsschalter 6 ist über eine Leitung 41 mit einer Energieerzeugungseinrichtung 33 verbunden, die einen Energiespeicher 37 - als Kondensator ausgebildet - aufweist. Die Energieerzeugungseinrichtung 33 weist weiterhin eine Fotodiode 40 auf.

Es ist ein Lichtwellenleiter 44 vorgesehen, der mit einem optischen Verteiler 41 verbunden ist. Mittels des optischen Verteilers 41 kann Licht aus dem Lichtwellenleiter 41 einerseits über einen Lichtwellenleiter 43 zu einer Kommunikationseinrichtung 39 und andererseits über einen Lichtwellenleiter 42 zur Fotodiode 40 geleitet werden. Die Kommunikationseinrichtung 39 kann aus den Lichtsignalen im Lichtwellenleiter 44 z.B. Steuersignale entnehmen und diese über die Datenleitung 38 an die Steuereinrichtung 34 übermitteln. Die Fotodiode 40 kann aus dem Licht im Lichtwellenleiter 42 elektrischen Strom erzeugen und diesen im Kondensator 37 der Energieerzeugungseinrichtung 33 zwischenspeichern. Steht eine ausreichende Energiemenge im Kondensator bereit, so wird über die Leitung 41 eine Spannung am Gate des Halbleiterschalters 8 erzeugt und dieser damit in einer Richtung leitend geschaltet.

Somit ist der Strompfad über den Zweirichtungsschalter 6 freigegeben, um den Kondensator 5 vorzuladen und die Steuereinrichtung 34 daraus zu speisen. Die Betriebsbereitschaft des Konverters ist damit hergestellt.

Die Energieerzeugungseinrichtung 33, die Fotodiode 40, der optische Verteiler 41 sowie die Lichtwellenleiter 44 und 42 bilden eine erfindungsgemäße Anordnung 50 zum Einschalten eines Zweirichtungsschalters 6 eines Konvertermoduls 1.

Gemäß einer alternativen Ausgestaltung kann die Fotodiode 40 durch eine Solarzelle zur Energiegewinnung ersetzt werden. Entsprechend entfallen der optische Verteiler und der Lichtwellenleiter 42; Lichtwellenleiter 44 ist dann unmittelbar mit der Kommunikationseinrichtung 39 verbunden.

**Patentansprüche**

1. Konvertermodul (1,2) für einen Modularen Multi-Level-Umrichter, aufweisend einen Zweirichtungsschalter (6), einen Kondensator (5) und eine Anordnung (50) zum Einschalten des Zweirichtungsschalters (6), **dadurch gekennzeichnet, dass** die Anordnung eine Energieerzeugungseinrichtung (33) zur Bereitstellung von elektrischer Energie für das Einschalten des Zweirichtungsschalters (6) aufweist, die zur Umwandlung von elektromagnetischer Strahlung in elektrische Energie geeignet ist, wobei der Kondensator (5) über den eingeschalteten Zweirichtungsschalter (6) vorgeladen wird.

2. Konvertermodul (1,2) nach Anspruch 1, **dadurch gekennzeichnet, dass** die Energieerzeugungseinrichtung (33) eine Solarzelle aufweist.

3. Konvertermodul (1,2) nach Anspruch 1 oder 2, **dadurch gekennzeichnet, dass** die Energieerzeugungseinrichtung eine Fotodiode (40) aufweist.

4. Konvertermodul (1,2) nach Anspruch 3, **dadurch gekennzeichnet, dass** die Fotodiode (40) mit einem Lichtwellenleiter (42,44) verbunden ist.

5. Konvertermodul (1,2) nach Anspruch 4, **dadurch gekennzeichnet, dass** der Lichtwellenleiter (44) zusätzlich mit einer Kommunikationseinrichtung (39) des Konvertermoduls (1) verbunden ist.

6. Konvertermodul (1,2) nach einem der vorhergehenden Ansprüche, **dadurch gekennzeichnet, dass** die Energieerzeugungseinrichtung (33) einen Energiespeicher (37) aufweist.

7. Konvertermodul (1,2) nach Anspruch 6, **dadurch gekennzeichnet, dass** der Energiespeicher (37) einen Kondensator aufweist.

8. Konvertermodul (1,2) nach Anspruch 6 oder 7, **dadurch gekennzeichnet, dass** der Energiespeicher (37) einen Supercapacitor aufweist.

9. Verfahren zur Herstellung der Betriebsbereitschaft eines Konvertermoduls (1,2) mit einem Zweirichtungsschalter (6) und einem Kondensator (5), **gekennzeichnet durch** die Schritte:

   Umwandeln von elektromagnetischer Strahlung in elektrische Energie mittels einer Energieerzeugungseinrichtung (33),
   Einschalten des Zweirichtungsschalters (6) mittels der erzeugten elektrischen Energie,
   Vorladen des Kondensators (5) über den eingeschalteten Zweirichtungsschalter (6).

10. Verfahren nach Anspruch 9, **dadurch gekennzeichnet, dass** für die Energieerzeugungseinrichtung (33) eine Solarzelle verwendet wird.

11. Verfahren nach Anspruch 9 oder 10, **dadurch gekennzeichnet, dass** für die Energieerzeugungseinrichtung (33) eine Fotodiode (40) verwendet wird.

12. Verfahren nach Anspruch 11, **dadurch gekennzeichnet, dass** die Fotodiode (40) mittels eines Lichtwellenleiters (42,44) mit elektromagnetischer Strahlung versorgt wird.

13. Verfahren nach Anspruch 12, **dadurch gekennzeichnet, dass** mittels des Lichtwellenleiters (44) zusätzlich mit einer Kommunikationseinrichtung (39) des Konvertermoduls (1,2) kommuniziert wird.

14. Verfahren nach einem der Ansprüche 9 bis 13, **dadurch gekennzeichnet, dass** für die Energieerzeugungseinrichtung (33) ein Energiespeicher (37) verwendet wird.

**Claims**

1. Converter module (1, 2) for a modular multi-level converter, comprising a two-way switch (6), a capacitor (5) and an arrangement (50) for switching on the two-way switch (6), **characterized in that** the arrangement comprises an energy generation device (33) for supplying electrical energy for switching on the two-way switch (6), said device being suitable for converting electromagnetic radiation into electrical energy, wherein the capacitor (5) is pre-charged through the two-way switch (6) which has been switched on.

2. Converter module (1, 2) according to Claim 1, **characterized in that** the energy generation device (33) comprises a solar cell.

3. Converter module (1, 2) according to Claim 1 or 2, **characterized in that** the energy generation device comprises a photodiode (40).

4. Converter module (1, 2) according to Claim 3, **characterized in that** the photodiode (40) is connected to a fibre-optic cable (42, 44).

5. Converter module (1, 2) according to Claim 4, **characterized in that** the fibre-optic cable (44) is additionally connected to a communication device (39) of the converter module (1).

6. Converter module (1, 2) according to any one of the preceding claims, **characterized in that** the energy generation device (33) comprises an energy storage unit (37).

7. Converter module (1, 2) according to Claim 6, **characterized in that** the energy storage unit (37) comprises a capacitor.

8. Converter module (1, 2) according to Claim 6 or 7, **characterized in that** the energy storage unit (37) comprises a super-capacitor.

9. Method for producing the operational standby of a converter module (1, 2) with a two-way switch (6) and a capacitor (5), **characterized by** the following steps:

converting electromagnetic radiation into electrical energy by means of an energy generation device (33), switching on the two-way switch (6) by means of the generated electrical energy, pre-charging the capacitor (5) through the two-way switch (6) which has been switched on.

10. Method according to Claim 9, **characterized in that** a solar cell is used for the energy generation device (33).

11. Method according to Claim 9 or 10, **characterized in that** a photodiode (40) is used for the energy generation device (33).

12. Method according to Claim 11, **characterized in that** the photodiode (40) is supplied with electromagnetic radiation by means of a fibre-optic cable (42, 44).

13. Method according to Claim 12, **characterized in that** the fibre-optic cable (44) is additionally used to communicate with a communication device (39) of the converter module (1, 2) .

14. Method according to any one of Claims 9 to 13, **characterized in that** an energy storage unit (37) is used for the energy generation device (33).


**Revendications**

1. Module (1, 2) de convertisseur pour un convertisseur modulaire à plusieurs niveaux, comportant un interrupteur (6) bidirectionnel, un condensateur (5) et un agencement (50) pour fermer l'interrupteur (6) bidirectionnel, **caractérisé en ce que** l'agencement a un dispositif (33) de production d'énergie pour disposer d'énergie électrique pour fermer l'interrupteur (6) bidirectionnel, agencement qui est propre à transformer du rayonnement électromagnétique en énergie électrique, dans lequel le condensateur (5) est préchargé par la fermeture de l'interrupteur (6) bidirectionnel.

2. Module (1, 2) de convertisseur suivant la revendication 1, **caractérisé en ce que** le dispositif (33) de production d'énergie a une cellule solaire.

3. Module (1, 2) de convertisseur suivant la revendication 1 ou 2, **caractérisé en ce que** le dispositif de production d'énergie a une photodiode (40).

4. Module (1, 2) de convertisseur suivant la revendication 3, **caractérisé en ce que** la photodiode (40) est reliée à un guide (42, 44) d'onde lumineuse.

**5.** Module (1, 2) de convertisseur suivant la revendication 4, **caractérisé en ce que** le guide (44) d'onde lumineuse est relié en outre à un dispositif (39) de communication du module (1) de convertisseur.

**6.** Module (1, 2) de convertisseur suivant l'une des revendications précédentes, **caractérisé en ce que** le dispositif (33) de production d'énergie a un accumulateur (37) d'énergie.

**7.** Module (1, 2) de convertisseur suivant la revendication 6, **caractérisé en ce que** l'accumulateur (37) d'énergie a un condensateur.

**8.** Module (1, 2) de convertisseur suivant la revendication 6 ou 7, **caractérisé en ce que** l'accumulateur (37) d'énergie à un supercapacitor.

**9.** Procédé pour rendre prêt à l'emploi un module (1, 2) de convertisseur ayant un interrupteur (6) bidirectionnel et un condensateur (5), **caractérisé par** les stades :

transformation de rayonnement électromagnétique en énergie électrique au moyen d'un dispositif (33) de production d'énergie,
fermeture de l'interrupteur (6) bidirectionnel au moyen de l'énergie électrique produite,
préchargement du condensateur (5) par la fermeture de l'interrupteur (6) bidirectionnel.

**10.** Procédé suivant la revendication 9, **caractérisé en ce qu'**on utilise une cellule solaire pour le dispositif (33) de production d'énergie.

**11.** Procédé suivant la revendication 9 ou 10, **caractérisé en ce que** l'on utilise une photodiode (40) pour le dispositif (33) de production d'énergie.

**12.** Procédé suivant la revendication 11, **caractérisé en ce que** l'on alimente la photodiode (40) en rayonnement électromagnétique au moyen d'un guide (42, 44) d'onde lumineuse.

**13.** Procédé suivant la revendication 12, **caractérisé en ce qu'**au moyen du guide (44) d'onde lumineuse on communique en outre avec un dispositif (39) de communication du module (1, 2) de convertisseur.

**14.** Procédé suivant l'une des revendications 9 à 13, **caractérisé en ce qu'**on utilise un accumulateur (37) d'énergie pour le dispositif (33) de production d'énergie.

## FIG 1

FIG 2

# FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013060354 A
- WO 2012116738 A
- US 20150214828 A1
- EP 0075699 A1
- DE 102013213263

**In der Beschreibung aufgeführte Nicht-Patentliteratur**

- **NITESH SATHEEESH et al.** Moving forward with reverse-blocking IGBTs. *Fuji Electric,* 05. Marz 2014
- **KLUMPNER et al.** Using Reverse-Blocking IGBTs in Power Converters for Adjustable-Speed Drives. *IEEE 2006*